# EUROPEAN PATENT APPLICATION

(11) **EP 2 871 808 A1**
(43) Date of publication of application: **13.05.2015**
(21) Application number: 14192090.0
(22) Date of filing: 06.11.2014
(51) Int. Cl.: H04L 12/58

(54) **Policy enforcement**

(30) Priority: 07.11.2013 GB 201319684
(71) Applicant: Clearswift Limited, Reading, Berkshire RG7 4SA (GB)
(72) Inventor: Steed, Matthew Keith James, Reading, Berkshire RG6 1NT (GB); Kingsnorth, Paul, Reading, Berkshire RG7 4SA (GB)
(74) Representative: O'Connell, David Christopher

(57) **Abstract**

In a communications network, policies are applied to electronic mail messages by determining a plurality of routes for electronic mail messages, each route being defined by at least one sender and at least one recipient, and determining a policy to be applied to electronic mail messages on each route. At least one tag is associated with each of a plurality of servers in the communications network, and at least one of the tags is associated with each of the plurality of routes. Each of the plurality of servers identifies the or each route that is associated with a tag that is associated with the server, and then applies the respective policy to electronic mail messages on the or each identified route. This allows policy to be defined on the basis of the role of the server and the policy features that it supports.

## Description

This invention relates to policy enforcement, allowing a policy administrator to apply appropriate polices in a straightforward manner.

In computer networks, in which data can easily be transferred between users on the network, and between users on the network and other users on linked networks, it is common for the network administrator to be able to set policies that prevent unwanted data transfers. For example, in electronic mail systems, it is common to apply policies to messages that are sent. That is, the network administrator is able to set various rules, and a policy manager in the system tests whether a message complies with those rules. If the message complies with the rules, then the message is sent to the intended destination. However, if the message does not comply with the rules, the policy can determine the action that is to be taken.

For example, the action that is taken in the event of a policy violation might be discarding the message, quarantining the message and sending a warning to the sender and/or intended recipient of the message, or the like.

In some networks, a message may pass through multiple network nodes, each of which is configured to be able to apply the policies set by the network administrator. This may mean for example that the relevant policy is applied to a message on more than one occasion, which is inefficient.

According to a first aspect of the present invention, there is provided a method of applying policies to electronic mail messages in a communications network, the method comprising:
determining a plurality of routes for electronic mail messages, each route being defined by at least one sender and at least one recipient, and determining a policy to be applied to electronic mail messages on each route;
associating at least one tag with each of a plurality of servers in the communications network;
associating at least one of said tags with each of the plurality of routes; and,
in each of said plurality of servers, identifying the or each route that is associated with a tag that is associated with the server; and
applying the respective policy to electronic mail messages on the or each identified route.

In certain embodiments, each route can be defined using wildcards.

The policy may be based on a content of the electronic mail messages, and the policy may further define an action to be taken if the content of the electronic mail messages meets a specified criterion.

Each tag may be associated with one server, or with a group of servers performing one role.

According to a second aspect of the invention, there is provided a computer program product, comprising computer readable code for causing a device to perform the method of the first aspect.

This has the advantage that it allows policy to be defined on the basis of the role of the server and the policy features that it supports.

For a better understanding of the present invention, and to show how it may be put into effect, reference will now be made, by way of example only, to the accompanying drawings, in which:-
Figure 1 is a schematic diagram of a computer network in accordance with an aspect of the present invention;
Figure 2 is a flow chart illustrating a method in accordance with an aspect of the invention; and
Figure 3 illustrates the operation of the method of Figure 2 in the network of Figure 1, as an example.

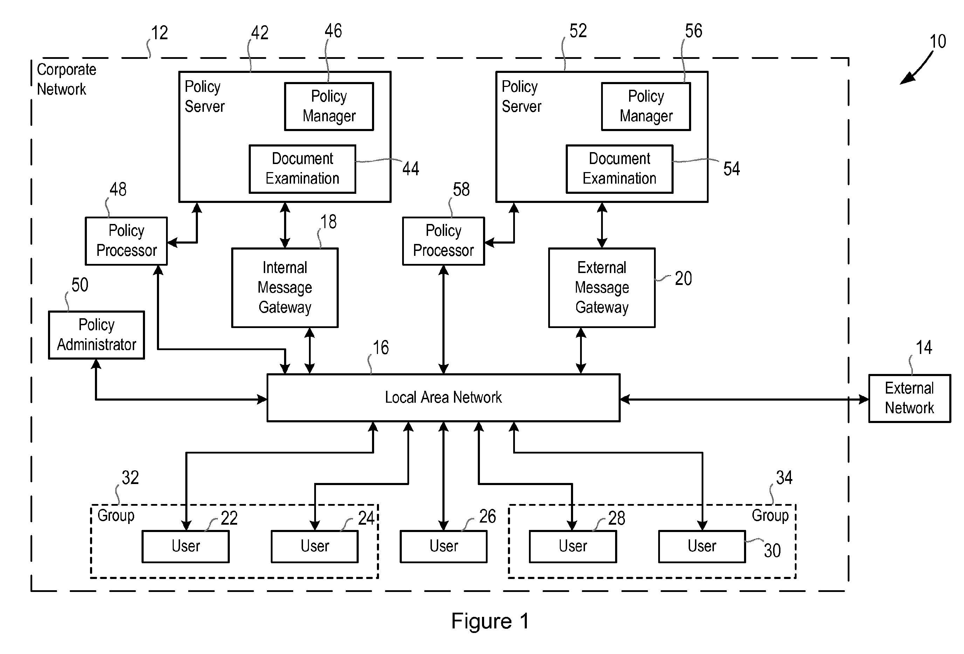

Figure 1 shows a part of a computer network 10. Specifically, Figure 1 shows a part of a corporate network 12, having a connection to an external network 14. In one embodiment, the corporate network 12 may for example be based on a local area network (LAN) 16 within an organisation, but it will be appreciated that the methods described herein could be applied in other situations. Similarly, the external network 14 could for example be the internet, but it will be appreciated that the methods described herein could be applied in other situations. For example, in a situation in which a company operates from two physical locations, the network 12 may be that company's privately owned local area network (LAN) at one location, while the network 14 may be another LAN privately owned by the same company at another location. In that case, the two privately owned LANs might be connected by a private wide area network (WAN), so that mail can be routed between the two locations without going over the internet.

Other network architectures exist, in which there are multiple types of mail server, performing different roles.

It will be noted that a network will typically contain at least two servers in each role, in order to provide resilience in the event of a failure. These redundant servers are generally not described further herein, to avoid unnecessary complexity of explanation.

In the illustrated network, the corporate network 12 includes two message gateways, namely an internal message gateway 18 and an external message gateway 20. Figure 1 also shows users 22, 24, 26, 28, 30 on the corporate network 12. Of course, there will be many more than five users in a typical network, but it is sufficient to show these users to illustrate the operation of the method. The users 22, 24, 26, 28, 30 may be connected to the corporate network through wireless connections, Ethernet connections, or any other suitable wired connection.

In this illustrated example, two users 22, 24 are in one group 32, and two other users 28, 30 are in another group 34. For example, users may be allocated to these groups based on their function within the organisation. That is, all members of the engineering team in an organisation might be within one group, while all members of the finance team might be within another group, and so on.

All electronic mail messages between two of the users 22, 24, 26, 28, 30 on the corporate network 12 are passed through the internal message gateway 18, while all electronic mail messages between one of the users 22, 24, 26, 28, 30 on the corporate network 12 and a user on the external network 14 are passed through the external message gateway 20.

Although two message gateways are shown in this example, it will be appreciated that corporate networks may have more complex structures. However, the illustrated architecture is sufficient for an explanation of the present invention.

A first policy server 42 is connected to the internal message gateway 18. As will be understood, the policy server 42 applies message policies to messages passing through the internal message gateway 18. The first policy server 42 includes at least a document examination block 44, and a policy manager 46. The policy server 42 operates under the control of a first policy processor 48. A network administrator of the corporate network 12 is able to communicate with the first policy processor 48 from a policy administrator function 50.

Similarly, a second policy server 52 is connected to the external message gateway 20. As will be understood, the second policy server 52 applies message policies to messages passing through the external message gateway 20. The second policy server 52 includes at least a document examination block 54, and a policy manager 56. The policy server 52 operates under the control of a second policy processor 58. The network administrator of the corporate network 12 is able to communicate with the second policy processor 58 from the policy administrator function 50.

In general terms, the purpose of the policy servers 42, 52 is to enforce policies that are set by, for example, the network administrator of the corporate network 12. For example, such policies may prohibit the sending of certain messages between certain users, or at least place conditions on the sending of such messages.

The policies may for example relate to messages that contain specified file types as attachments, or that exceed a specified size. The policies may relate to the information content of a message. For example, a policy may prohibit the transmission of a message that contains profanity, or has potentially sensitive content such as a credit card number. More specifically, the policies may relate equally to the information content of the body of an email message, to the information content of an attachment to an email message, and/or to the information content of structural constructs such as page headers and footers, footnotes and endnotes.

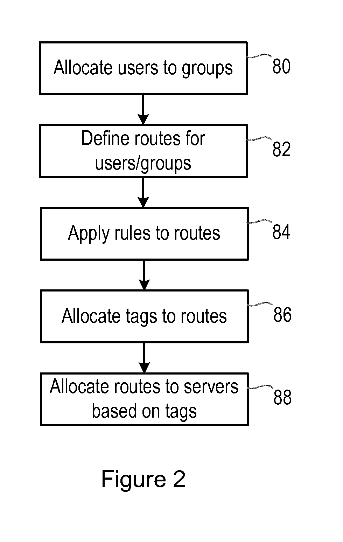

As described herein, policies are allocated by a network administrator, according to the method shown in Figure 2.

In step 80 of the process shown in Figure 2, some or all of the users in the corporate network 12 may be allocated to groups. Other users in the external network 14 may also be allocated to groups.

The allocation of users to groups is carried out so that policy rules can be applied to multiple users in a convenient manner. For example, as mentioned above, all members of the engineering team in an organisation might be within one group, if those users all need to be able to send messages containing certain file types when other users in the organisation are not allowed to send such messages. Similarly, some or all members of the finance team might be within another group, if those users need to be able to send messages containing confidential financial information when other users in the organisation are not allowed to send such messages, and so on.

Equally, all email addresses outside the organisation might be within one group, if it is desired to enforce a policy rule restricting the sending of company confidential information in messages sent outside the organisation. Similarly, email addresses within the organisation's external accountancy firm might be within a group, if it is desired that they should be allowed to receive messages containing company confidential information as an exception to the general rule that restricts sending messages containing company confidential information outside the organisation.

In step 82 of the process, the network administrator defines multiple routes, based on the previously defined groups. A route is a pair of identities that identify the participants in data transfer (for example, sending and receiving email). An identity, in this sense, may be a collection of personal identities.

That is, in this example, the personal identities are sender and recipient email addresses. More generally, a route is defined as a source and a destination, each of which can be one or more end points. In the case of email, the end points are email addresses that may contain wildcards. So, while a route may be defined as being between two specific people (for example, sender@mydomain.com to recipient@yourdomain.com), it may be between one specific person and one collection of people (for example sender@mydomain.com to *@yourdomain.com or *@mydomain.com to recipient@yourdomain.com), or between multiple pairs of end points (for example *@mydomain.com to *@yourdomain.com), where "*" is a wildcard symbol, and thus represents an email address list that may contain many addresses. A source or destination defined using a wildcard might have the form illustrated above, namely *@yourdomain.com to represent all users at a specific domain, but other uses are also possible. For example, a source or destination might be defined using a wildcard in the form fred*@yourdomain.com to represent all users at the specific domain whose email addresses begin with the string "fred", or a source or destination might be defined using a wildcard in the form *@*.domain.com to represent all users in sub-domains of the specific domain.

The routes are defined to the extent that the network administrator wishes to apply policy rules to the routes and in step 84 of the process rules are defined and applied to the routes.

Thus, in the situation described above, one route may be defined as being between all email addresses within the organisation and all email addresses outside the organisation. A policy rule can then be associated with that route, whereby messages having specified content information may not be transmitted.

Another route may then be defined as being between all email addresses within the finance department of the organisation and all email addresses in the external accountancy firm used by the organisation. A policy rule can then be associated with that route whereby messages having specified content information may be transmitted, as an exception to that first general rule.

Thus, a policy is defined by a set of rules (for example a textual analysis rule for detecting profanity) which are combined with routes (the source and destination of data). The same rule may be used on many routes (that is, the same test can be applied for detecting profanity in email messages between various groups of people). The policy is also associated with a policy action, to be taken when it is determined that a message meets the conditions associated with the policy (for example, when it is determined that the message contains profanity, according to the relevant rule). The action taken in response to a message meeting the conditions associated with the profanity can be different for different routes. For example, the policy associated with one route may permit delivery of the message after adding a warning about profanity, while the policy associated with another route may block the delivery of the message.

In step 86 of the process, the network administrator allocates one or more tags to each of the routes defined in step 82. Each tag is associated with at least one respective server of the corporate network 12. In a simple case, each tag is associated with a respective server, but in other cases a tag may be associated with a group of servers, or with all of the servers.

As noted above, in some network architectures, there are two or more servers in a role, in order to provide resilience in the event of a failure. In that case, the statement that a tag is associated with a server means that the tag is associated with the server or servers that have the same role.

The tags are allocated based on the policy server or servers that are associated with the respective route.

Thus, the method described herein allows a route (that is, a set of source and destination addresses) to be defined multiple times, namely once with each of the possible tags. That is, if three tags are defined, the route can be defined three times, once with each of the tags. Each duplicate route can have a different set of rules, or can have the same set of rules with different policy actions to be taken if the rule is satisfied.

Each type of server is typically allocated one tag and, therefore, only applies the rules contained in the routes matching its tag.

The effect is that, instead of having to maintain multiple, separate policies for each type of server, a single policy can be implemented that specifies the variations required for each type of server. This allows a policy to be developed that shares rules and routes where appropriate and uses rules and routes specific to each type of server where necessary.

Additionally, in practice, not all types of server support all of the available features. For example, one of the servers might not support all of the policy rules or policy actions. One example is where the policy specifies that certain messages must be encrypted before transmission. If encryption is not supported by one of the servers, then the method described herein means that rules requiring encryption can still be used on routes that are tagged to indicate that encryption is supported by the server.

Thus this method allows policy to be defined on the basis of the role of the server and the policy features that it supports.

The method described herein therefore means that, because each type of server may be deployed in a different environment, it is possible to avoid repeatedly applying policy unnecessarily, by only applying a policy that is appropriate to each environment.

In this example, a single network administrator is able to allocate all of the tags to the available routes. However, it is also possible that different network administrators might be responsible for different parts of the network, and therefore for different servers.

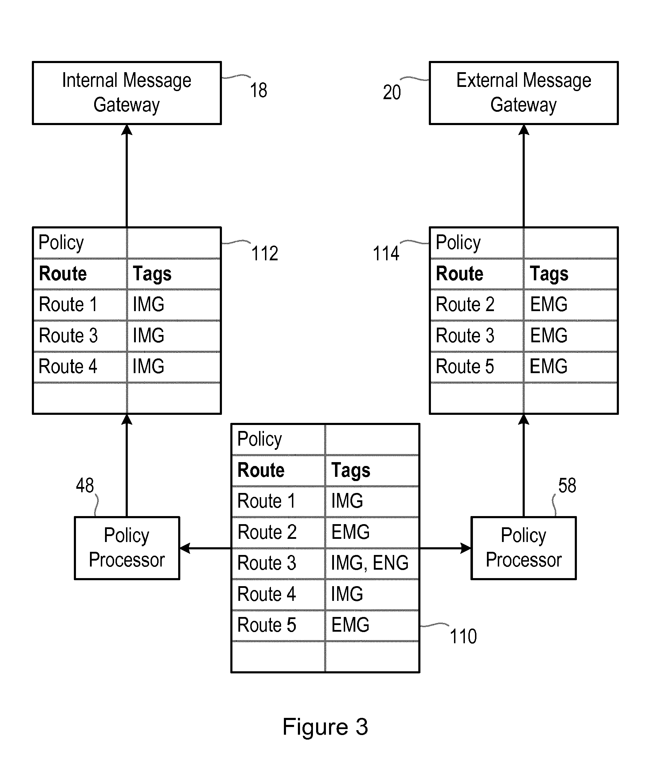

Figure 3 illustrates the operation of this step. Thus, in step 86, the network administrator associates a tag with each of the routes that have been previously defined. In the example illustrated in Figure 3, five routes have been defined, namely Route 1, Route 2, Route 3, Route 4 and Route 5.

In this example, messages associated with Route 1 pass through the internal message gateway 18, and thus the relevant policy is applied to such messages in the policy server 42 that is associated with the internal message gateway 18. This would typically apply when the sender and recipient associated with that route are within the corporate network 12. Similarly, messages associated with Route 4 pass through the internal message gateway 18, and thus the relevant policy is applied to such messages in the policy server 42 that is associated with the internal message gateway 18.

Thus, in step 86, as shown in table 110 in Figure 3, Route 1 and Route 4 are associated with the tag IMG. (Of course, the exact form of the tag is unimportant, but this is a convenient way to refer to routes associated with the Internal Message Gateway.)

By contrast, messages associated with Route 2 pass through the external message gateway 20, and thus the relevant policy is applied to such messages in the policy server 52 that is associated with the external message gateway 20. This would typically apply when either the sender or recipient associated with that route are located in the external network 14. Similarly, messages associated with Route 5 pass through the external message gateway 20, and thus the relevant policy is applied to such messages in the policy server 52 that is associated with the external message gateway 20.

Thus, in step 86, Route 2 and Route 5 are associated with the tag EMG.

In this example, messages associated with Route 3 pass through both the internal message gateway 18 and the external message gateway 20. This would typically be the case when the route is defined as being between a specific sender and a group of recipients, or between a group of senders and a specific recipient, or between a group of senders and a group of recipients, when the group contains some addresses that are within the corporate network 12 and some addresses that are located in the external network 14.

In such a situation, the relevant messages pass through the internal message gateway 18 and the external message gateway 20, and so the relevant policy must be applied to such messages in the policy server 42 that is associated with the internal message gateway 18 and in the policy server 52 that is associated with the external message gateway 20.

Another situation in which this can apply is when there exists a default route. That is, when the routes are defined by the network administrator in such a way that certain messages do not meet any of the defined routes, and would therefore have no policy applied to them, one option is to define these messages as "misrouted", and to allocate all "misrouted" messages to a default route.

Thus, in step 86, Route 3 is associated with the tags IMG and EMG.

As discussed above, a respective policy processor 48, 58 is associated with each policy server 42, 52.

In step 88 of the process of Figure 2, the routes are allocated to the policy servers 42, 52 based on the allocated tags. That is, each policy processor 48, 58 examines the list 110 shown in Figure 3, and identifies the routes that have the tag associated with the respective server. In this illustrated example, each server has one associated tag. Specifically, the policy server 42 is associated with the internal message gateway 18, and hence with the tag IMG, while the policy server 52 is associated with the external message gateway 20, and hence with the tag EMG.

In other embodiments, a server may have more than one tag associated with it, and more than one server may be associated with the same tag. For example, the network may be used for multi-tenanting, whereby the network is used for carrying traffic belonging to two or more separate tenants, and the routes belonging to the different tenants are identified by different tags. In that case, a server may need to be associated with tags belonging to each of the tenants. In another example, a single server may provide two or more functions that use different routes. For example, one server may be used for the internal message gateway and for the external message gateway, in which case that server will need to be associated with tags corresponding to routes that use both gateways.

In this illustrated example, the policy processor 48 is associated with the policy server 42, and so it identifies the routes that have the tag associated with the internal message gateway 18 as this is linked with the policy server 42. Specifically, the policy processor 48 generates a list 112 containing Route 1, Route 3 and Route 4, as these routes are associated with the tag IMG, which is in turn associated with the internal message gateway 18.

Similarly, the policy processor 58 is associated with the policy server 52, and so it identifies the routes that have the tag associated with the external message gateway 20 as this is linked with the policy server 52. Specifically, the policy processor 58 generates a list 114 containing Route 2, Route 3 and Route 5, as these routes are associated with the tag EMG, which is in turn associated with the external message gateway 20.

Thus, the policy processor 48 ensures that the policy server 42 applies the relevant polices to messages on the routes associated with the tag IMG, while the policy processor 58 ensures that the policy server 52 applies the relevant policies to messages on the routes associated with the tag EMG.

As described so far, a single network administrator determines which polices are to be applied to each route, and which tag or tags are to be associated with each policy server. Thus, a network administrator can control a single content management policy for the entire internal and boundary email system.

However, the invention can also be applied to network environments in which there are multiple policy servers, for example distributed across multiple sites of an organisation. In such a situation, there might be a separate administrator for each site. To allow those administrators to modify the policy for the servers in their site, but not to modify the policy for other sites, access rights can be set so that there is a tag allocated to each server, and each tag can be associated with an access control list and a set of permissions that allow only that administrator to view and modify the policy on routes with that tag.

There is thus described a system that allows policies to be applied in an efficient manner across a network.

## Claims

1. A method of applying policies to electronic mail messages in a communications network, the method comprising:
determining a plurality of routes for electronic mail messages, each route being defined by at least one sender and at least one recipient, and determining a policy to be applied to electronic mail messages on each route;
associating at least one tag with each of a plurality of servers in the communications network;
associating at least one of said tags with each of the plurality of routes; and,
in each of said plurality of servers, identifying the or each route that is associated with a tag that is associated with the server; and
applying the respective policy to electronic mail messages on the or each identified route.

2. A method as claimed in claim 1, wherein each route can be defined using wildcards.

3. A method as claimed in claim 1 or 2, wherein the policy is based on a content of the electronic mail messages.

4. A method as claimed in claim 3, wherein the policy further defines an action to be taken if the content of the electronic mail messages meets a specified criterion.

5. A method as claimed in any preceding claim, wherein each tag is associated with one server, or with a group of servers performing one role.

6. A computer program product, comprising computer readable code for causing a device to perform the method as claimed in any preceding claim.
